# EUROPEAN PATENT APPLICATION

(11) **EP 4 700 506 A1**
(43) Date of publication of application: **25.02.2026**
(21) Application number: 24792475.6
(22) Date of filing: 01.04.2024
(51) Int. Cl.: G05B 19/05, G05B 23/02, G06F 11/32

(54) **INFORMATION PROCESSING SYSTEM, INFORMATION PROCESSING METHOD, AND PROGRAM**

(30) Priority: 19.04.2023 JP 2023068402
(71) Applicant: OMRON Corporation, Kyoto-shi, Kyoto 600-8530 (JP)
(72) Inventor: SHIGEMORI, Yutsuka, Kyoto-shi, Kyoto 600-8530 (JP); TAMASHIMA, Daisuke, Kyoto-shi, Kyoto 600-8530 (JP); OHNUKI, Haruna, Kyoto-shi, Kyoto 600-8530 (JP); MANABE, Mikiko, Kyoto-shi, Kyoto 600-8530 (JP)
(74) Representative: Mewburn Ellis LLP
(86) International application number: PCT/JP2024/013433
(87) International publication number: WO 2024/219199

(57) **Abstract**

An information processing system includes: one or more visualization modules each configured to visualize a visualization-target variable value representing a control state of a PLC; and a reproduction module configured to sequentially reproduce a variable value held in the PLC for each first control cycle of the PLC in a target period based on a time-series dataset recorded by the PLC in the target period. The one or more visualization modules each acquire, as the visualization-target variable value, the variable value reproduced by the reproduction module. Thereby, a user can easily add a module for visualizing the visualization-target variable value.

## Description

### TECHNICAL FIELD

The present disclosure relates to an information processing system, an information processing method, and a program.

### BACKGROUND ART

In order to investigate the cause of an abnormal operation of production equipment, a development has been under way for implementing a technology for recording time-series data collected in a programmable logic controller (PLC) that controls the production equipment and visualizing the recorded time-series data.

For example, Japanese Patent Laying-Open No. 2020-13528 (PTL 1) discloses an engineering tool having: storage means for storing a plurality of time-series device values collected in a PLC; and a plurality of software modules for visualizing the device values. The engineering tool disclosed in PTL 1 includes synchronization means for synchronizing display target times in the plurality of software modules in a history replay mode.

### CITATION LIST

### PATENT LITERATURE

PTL 1: Japanese Patent Laying-Open No. 2020-13528

### SUMMARY OF INVENTION

### TECHNICAL PROBLEM

In the engineering tool disclosed in PTL 1, when the display target time is updated in any one of the plurality of software modules, the synchronization means reflects the updated display target time in each of the remaining software modules. In other words, the display target time is exchanged among the plurality of software modules. Thus, when a new software module for visualizing the device value is added, a user needs to modify the existing software modules in order to allow for an exchange of the display target time with this new software module. As a result, it takes time and effort to add a new software module.

The present disclosure has been made in view of the above-described problem, and an object thereof is to provide an information processing system, an information processing method, and a program by which a module for visualizing a visualization-target variable value (a variable value that is a target to be visualized) can be easily added.

### SOLUTION TO PROBLEM

According to an example of the present disclosure, an information processing system includes: one or more visualization modules each configured to visualize a visualization-target variable value representing a control state of a programmable logic controller; and a reproduction module configured to sequentially reproduce a variable value held in the programmable logic controller for each first control cycle of the programmable logic controller in a target period based on a time-series dataset recorded by the programmable logic controller in the target period. The one or more visualization modules are each configured to acquire, as the visualization-target variable value, the variable value reproduced by the reproduction module.

According to the present disclosure, when a new visualization module is added, a user should only set the new visualization module so as to allow the variable value reproduced by the reproduction module to be acquired as the visualization-target variable value, and thus, does not need to modify the existing visualization modules. Therefore, the user can easily add a new visualization module.

In the above disclosure, the reproduction module is configured to reproduce the variable value held in the programmable logic controller in a first control cycle subsequent to a target first control cycle in the target period at a timing at which a prescribed time period has elapsed since reproduction of the variable value held in the programmable logic controller in the target first control cycle in the target period.

According to the present disclosure, the user checks the information visualized by the one or more visualization modules and thereby can grasp the change in the variable value held in the programmable logic controller in the target period.

In the above disclosure, the time-series dataset includes: first time-series data indicating a value of a first variable for each the first control cycle in the target period; and second time-series data indicating a value of a second variable for each second control cycle in the target period, the second control cycle being longer than the first control cycle. The reproduction module is configured to read, from the first time-series data, a first target value of the first variable in the target first control cycle. The reproduction module is configured to read, from the second time-series data, a second target value of the second variable in a target second control cycle, the target second control cycle being a cycle before the target first control cycle and closest to the target first control cycle. The reproduction module is configured to determine the first target value and the second target value each as the variable value held in the programmable logic controller in the target first control cycle.

According to the present disclosure, even if there are a plurality of variables whose values are updated in different control cycles, the reproduction module can reproduce the variable values held in the programmable logic controller.

In the above disclosure, the first time-series data further indicates a first time for each the first control cycle in the target period. The second time-series data further indicates a second time for each the second control cycle in the target period. The reproduction module is configured to refer to a table to read the first target value and the second target value from the first time-series data and the second time-series data, respectively. The table shows an association, for each the first control cycle in the target period, among: a counter value representing an ordinal number of the first control cycle; the first time in the first control cycle; and the second time in the second control cycle, the second time being a time before the first time in the first control cycle and closest to the first time in the first control cycle. The reproduction module is configured to: add 1 to a target counter value each time the prescribed time period elapses; and specify, from the table, the first time and the second time each corresponding to the target counter value. The reproduction module is configured to: read, from the first time-series data, the value of the first variable corresponding to the specified first time as the first target value; and read, from the second time-series data, the value of the second variable corresponding to the specified second time as the second target value.

According to the present disclosure, a plurality of variable values updated in different control cycles are easily reproduced.

In the above disclosure, the prescribed time period is selected from among: a time period equal to the first control cycle; and a time period obtained by dividing a time period of the first control cycle by a designated scale factor.

According to the present disclosure, when the prescribed time period is equal to the first control cycle, the user can check the change in the control state of the programmable logic controller in the target period at the same speed as the actual speed of change. Further, when the prescribed time period is a time period obtained by dividing the time period of the first control cycle by the designated scale factor, the user can check the change in the control state of the programmable logic controller in the target period at the speed higher than the actual speed of change.

In the above disclosure, the information processing system further includes a selection unit configured to select one of a plurality of modes including: a first mode in which the one or more visualization modules each acquire, as the visualization-target variable value, the variable value reproduced by the reproduction module; and a second mode in which the one or more visualization modules each acquire, as the visualization-target variable value, a variable value currently held in the programmable logic controller.

According to the present disclosure, the user can switch each of the variable values visualized by the one or more visualization modules between the variable value currently held in the programmable logic controller and the variable value in the target period that has been reproduced by the reproduction module.

According to another example of the present disclosure, an information processing method is applied in an information processing apparatus including one or more visualization modules each configured to visualize a visualization-target variable value representing a control state of a programmable logic controller. The information processing method includes: sequentially reproducing a variable value held in the programmable logic controller for each first control cycle of the programmable logic controller in a target period based on a time-series dataset recorded by the programmable logic controller in the target period; and acquiring, by each of the one or more visualization modules, the reproduced variable value as the visualization-target variable value.

According to still another example of the present disclosure, a program causes a computer to execute the above-described information processing method.

According to the above disclosures, the user can easily add a module for visualizing the visualization-target variable value.

### ADVANTAGEOUS EFFECTS OF INVENTION

According to the present disclosure, the user can easily add the module for visualizing the visualization-target variable value.

### BRIEF DESCRIPTION OF DRAWINGS

Fig. 1 is a diagram schematically illustrating an example of a manufacturing system to which an information processing system according to an embodiment is applied.
Fig. 2 is a schematic diagram showing an example of an overall configuration of the manufacturing system according to the embodiment.
Fig. 3 is a schematic diagram showing an example of a hardware configuration of a PLC according to the embodiment.
Fig. 4 is a block diagram showing an example of a software configuration of a PC and the PLC.
Fig. 5 is a diagram showing an example of a first window on which a replay operation by a reproduction PLC is performed.
Fig. 6 is a diagram explaining an example of a process by a time-series data management unit.
Fig. 7 is a diagram explaining a method of switching a source from which one or more visualization modules each acquire a visualization-target variable value.
Fig. 8 is a diagram showing an example of a configuration of a PLC simulator.
Fig. 9 is a flowchart showing a flow of a process by the PC in a playback mode.
Fig. 10 is a flowchart showing a flow of a process of a subroutine in step S3 shown in Fig. 9.
Fig. 11 is a flowchart showing a flow of a process of a subroutine in step S4 shown in Fig. 9.

### DESCRIPTION OF EMBODIMENTS

Embodiments of the present invention will be described in detail with reference to the accompanying drawings. The same or corresponding portions in the drawings are denoted by the same reference characters, and the description thereof will not be repeated. In the present specification, the term "or" includes the meaning of "and" in addition to the meaning of "or" unless otherwise specified.

### §1 Application Examples

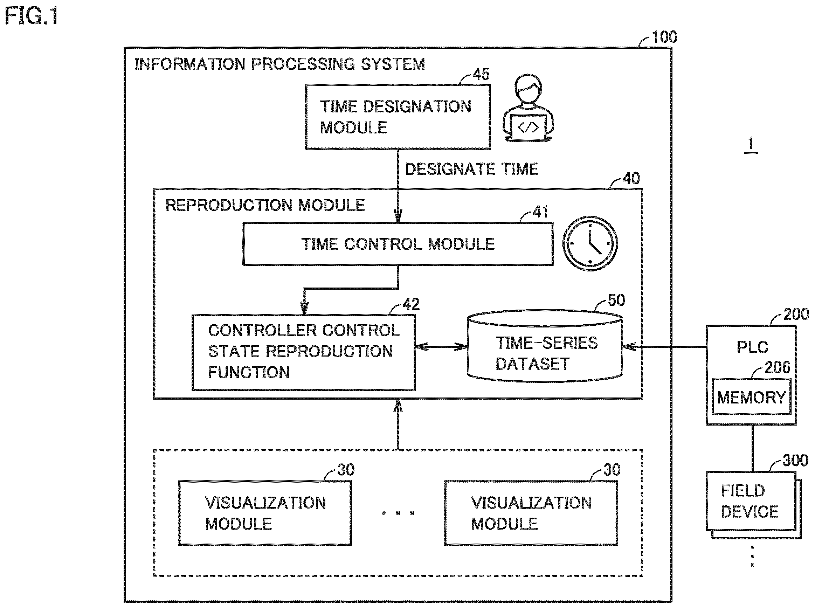

Fig. 1 is a diagram schematically illustrating an example of a manufacturing system to which an information processing system according to an embodiment is applied. As shown in Fig. 1, a manufacturing system 1 includes an information processing system 100, a programmable logic controller (hereinafter referred to as a "PLC 200"), and one or more field devices 300.

PLC 200 is connected to one or more field devices 300, and controls one or more field devices 300 according to a control program created in advance. Each of one or more field devices 300 includes: an actuator that exerts some physical action on production equipment, a production line, or the like (hereinafter also collectively referred to as a "field"); various sensors installed in the field; an input/output device that exchanges information with the field; or the like.

PLC 200 includes a memory 206 that holds various variable values exchanged with one or more field devices 300. The variable values held in memory 206 include: various state values indicating the states of one or more field devices 300; and various command values to be output to one or more field devices 300.

PLC 200 updates the variable values held in memory 206 in one of one or more control cycles in the order of several hundred µsec to the order of several dozen msec. The control cycles are set in advance according to the types of the variables. For example, PLC 200 updates the values of some of the variables held in memory 206 in 1 msec, and updates the values of some others of the variables in 2 msec. Hereinafter, the shortest control cycle among the one or more control cycles is referred to as a "first control cycle".

PLC 200 generates a time-series dataset 50 by recording the variable values held in memory 206 in the target period. The generated time-series dataset 50 is moved to information processing system 100. How to move time-series dataset 50 from PLC 200 to information processing system 100 is not particularly limited, but time-series dataset 50 is moved by using a storage medium such as a memory card.

Information processing system 100 is constituted of one or more computers. Information processing system 100 includes one or more visualization modules 30, a reproduction module 40, and a time designation module 45.

One or more visualization modules 30 each visualize, on a screen, a visualization-target variable value representing the control state of PLC 200. For example, one or more visualization modules 30 include a visualization module that generates data showing a window that includes a graph indicating transition of each visualization-target variable value. Alternatively, one or more visualization modules 30 may include a visualization module that generates data showing a window on which visualization-target variable values are described on a ladder diagram representing a control program.

Based on time-series dataset 50 recorded by PLC 200 in the target period, reproduction module 40 sequentially reproduces the variable values held in PLC 200 for each first control cycle in the target period. Hereinafter, the data indicating the variable value reproduced by reproduction module 40 is referred to as "reproduction data".

Reproduction module 40 includes a time control module 41 and a controller control state reproduction function 42.

Time control module 41 controls the target time in the target period at which the variable value is to be reproduced. Time control module 41 updates the target time every prescribed time period based on a replay start point and a replay condition received from time designation module 45. The replay start point indicates one time belonging to the target period. The replay condition indicates a replay speed or the like, and defines the above-mentioned prescribed time period.

Controller control state reproduction function 42 extracts data corresponding to the target time from time-series dataset 50 every prescribed time period, and, based on the extracted data, generates reproduction data indicating the variable value held in PLC 200 at the target time.

Time designation module 45 determines the replay start point and the replay condition in response to a user input, and outputs the determined replay start point and replay condition to reproduction module 40.

One or more visualization modules 30 each acquire, as a visualization-target variable value, a variable value indicated by the reproduction data. Thereby, when a new visualization module is added, the user should only set this new visualization module such that the variable value reproduced by reproduction module 40 can be acquired as a visualization-target variable value, but the user does not need to modify existing visualization module 30. Thus, the user can easily add a new visualization module.

### §2 Specific Examples

### <Overall Configuration of Manufacturing System>

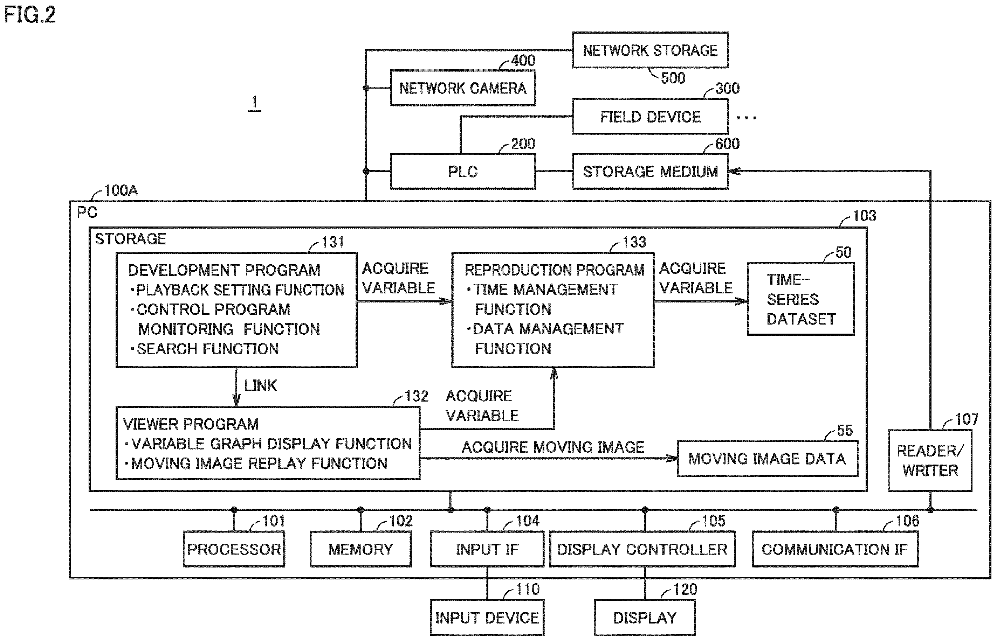

Fig. 2 is a schematic diagram showing an example of an overall configuration of the manufacturing system according to the embodiment. As shown in Fig. 2, manufacturing system 1 includes a personal computer (hereinafter referred to as a "PC 100A") constituting information processing system 100, PLC 200, one or more field devices 300, a network camera 400, a network storage 500, and a storage medium 600. PC 100A, PLC 200, network camera 400, and network storage 500 can communicate with each other, for example, through general-purpose Ethernet (registered trademark). PC 100A and PLC 200 may communicate with each other through another communication means (e.g., a universal serial bus (USB)).

Network camera 400 is installed in a field and photographs at least some of one or more field devices 300.

Network storage 500 stores a group of moving image data generated by photographing by network camera 400.

Storage medium 600 is used for transferring time-series dataset 50 from PLC 200 to PC 100A. Storage medium 600 includes a volatile storage medium, a non-volatile storage medium, a general-purpose semiconductor storage device such as a compact flash (CF) device or a secure digital (SD) device, a magnetic storage medium such as a flexible disk, or an optical storage medium such as a compact disk read only memory (CD-ROM).

PC 100A is typically a computer having a general-purpose architecture. As shown in Fig. 2, PC 100A includes: a processor 101 such as a central processing unit (CPU) or a micro processing unit (MPU); a memory 102 configured of a volatile storage device such as a dynamic random access memory (DRAM) or a static random access memory (SRAM); a storage 103 configured of a non-volatile storage device such as a hard disk drive (HDD) or a solid state drive (SSD); an input interface 104; a display controller 105; a communication interface 106; and a reader/writer 107. These components are connected to each other via a bus so as to allow data communication therebetween.

Processor 101 reads a program stored in storage 103 and deploys the program in memory 102. Processor 101 executes the deployed program.

Storage 103 stores programs executed by processor 101, time-series dataset 50 taken out from PLC 200 through a memory card, and moving image data 55 acquired from network storage 500.

The programs executed by processor 101 include a development program 131, a viewer program 132, and a reproduction program 133.

Development program 131 mainly supports development of the control program used by PLC 200. Further, development program 131 provides: a setting function related to generation of time-series dataset 50; a function of monitoring the status of execution of the control program by PLC 200 (hereinafter referred to as a "control program monitoring function"); and a search function. The search function includes, for example, a function of searching for the timing at which a designated variable changes in the status of execution of the control program by PLC 200.

Viewer program 132 is a program for visualizing various pieces of information and providing the visualized information to the user. Viewer program 132 provides: a function of displaying a variable graph showing transitions of various variable values (hereinafter referred to as a "variable graph display function"); and a function of replaying a moving image presented by moving image data 55.

Upon activation of development program 131, viewer program 132 is linked to development program 131 and deployed in memory 102.

Reproduction program 133 reproduces the past control state of PLC 200. Reproduction program 133 provides: a function of managing the target time at which the control state is reproduced; and a function of managing time-series data (hereinafter referred to as a "data management function"). The data management function includes a function of reading a variable value from time-series dataset 50.

Input interface 104 mediates transmission of data between processor 101 and an input device 110 such as a keyboard, a mouse, or a touch panel. Display controller 105 is connected to a display 120 and causes display 120 to show a screen represented by the screen data generated by processor 101. Communication interface 106 communicates with PLC 200 and network storage 500 via a communication network. Reader/writer 107 mediates transmission of data between processor 101 and external storage medium 600.

Each of development program 131, viewer program 132, and reproduction program 133 may not be provided as a single program but may be incorporated into a part of any program. In this case, the process according to the present embodiment is implemented in cooperation with any program. Further, some or all of the functions provided by development program 131, viewer program 132, and reproduction program 133 may be implemented by a dedicated hardware circuit (for example, an application specific integrated circuit (ASIC) or a field-programmable gate array (FPGA)).

### <Hardware Configuration of PLC>

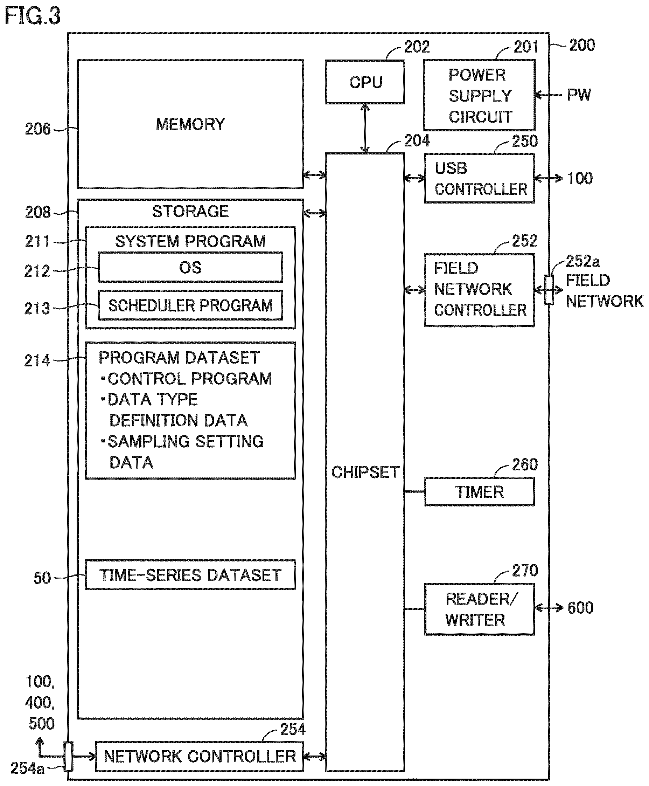

Fig. 3 is a schematic diagram showing an example of a hardware configuration of the PLC according to the embodiment. As shown in Fig. 3, PLC 200 includes, as main components, a power supply circuit 201 that supplies electric power PW to each part of PLC 200, a CPU 202, a chipset 204, a memory 206, a storage 208, a USB controller 250, a field network controller 252, a network controller 254, a timer 260, and a reader/writer 270.

CPU 202 reads the program stored in storage 208 and deploys the program in memory 206. CPU 202 executes the deployed program.

Memory 206 is configured of a volatile storage device such as a DRAM or an SRAM. As described above, memory 206 holds various variable values including: a state value to be transferred from one or more field devices 300 to PLC 200; and a command value to be output to one or more field devices 300. CPU 202 executes the program stored in storage 208 to thereby update various variable values held in memory 206 according to a control cycle set in advance in accordance with the type of each of the variables.

Storage 208 is configured, for example, of a non-volatile storage device such as a hard disc drive (HDD), a solid state drive (SSD), or a flash memory, but a part thereof may be configured of a volatile storage.

Chipset 204 mediates exchange of data between CPU 202 and each component to implement a process as the entire PLC 200.

Storage 208 stores a system program 211 including an operating system (OS) 212 and a scheduler program 213 for implementing basic functions of PLC 200.

Further, storage 208 stores a program dataset 214 produced by PC 100A. Program dataset 214 includes a control program, data type definition data, and sampling setting data.

The control program defines: a process of collecting state values indicating the states of one or more field devices 300; and a process of generating command values to one or more field devices 300, the command values being generated by computation based on the collected state values. The variable values including the state values and the command values are temporarily stored in memory 206. Thus, CPU 202 executes the control program to thereby update the variable values held in memory 206.

The data type definition data defines the data type of each variable used by the control program. The variables used by the control program include a variable indicating the state of each of one or more field devices 300 and a variable to be output to one or more field devices 300.

The sampling setting data defines a generation condition for time-series dataset 50. The generation condition for time-series dataset 50 indicates a start condition for sampling, variables to be sampled, a sampling time period, and the like.

Further, storage 208 stores time-series dataset 50 generated according to the generation condition indicated by the sampling setting data.

USB controller 250 serves to exchange data with an external device (for example, PC 100A) through a USB connection.

Field network controller 252 has a connector 252a for connecting to a field network, and controls exchange of data between PLC 200 and one or more field devices 300 through the field network. Field network controller 252 has an internal buffer for storing: input data received from the field network; and output data to be output from PLC 200 to the field network.

Network controller 254 has a connector 254a for connecting to an upper network, and controls exchange of data between PLC 200 and an external device (for example, PC 100A, network camera 400, or network storage 500).

Timer 260 is configured to include a clock circuit or a counter circuit that measures time, but is not limited to such a circuit and may be configured of a software module executed by CPU 202.

Reader/writer 270 mediates transmission of data between CPU 202 and external storage medium 600.

Fig. 3 shows a configuration example in which CPU 202 executes a program to provide necessary functions, but some or all of the provided functions may be implemented using a dedicated hardware circuit (for example, an ASIC or an FPGA). Alternatively, main parts of PLC 200 may be implemented by hardware conforming to a general-purpose architecture (for example, an industrial personal computer based on a general-purpose personal computer). In this case, multi-core technology may be applied to perform processes in parallel. Alternatively, virtualization technology may be used to execute a plurality of OSs having different uses in parallel, and to execute a necessary application on each OS.

### <Functional Configuration>

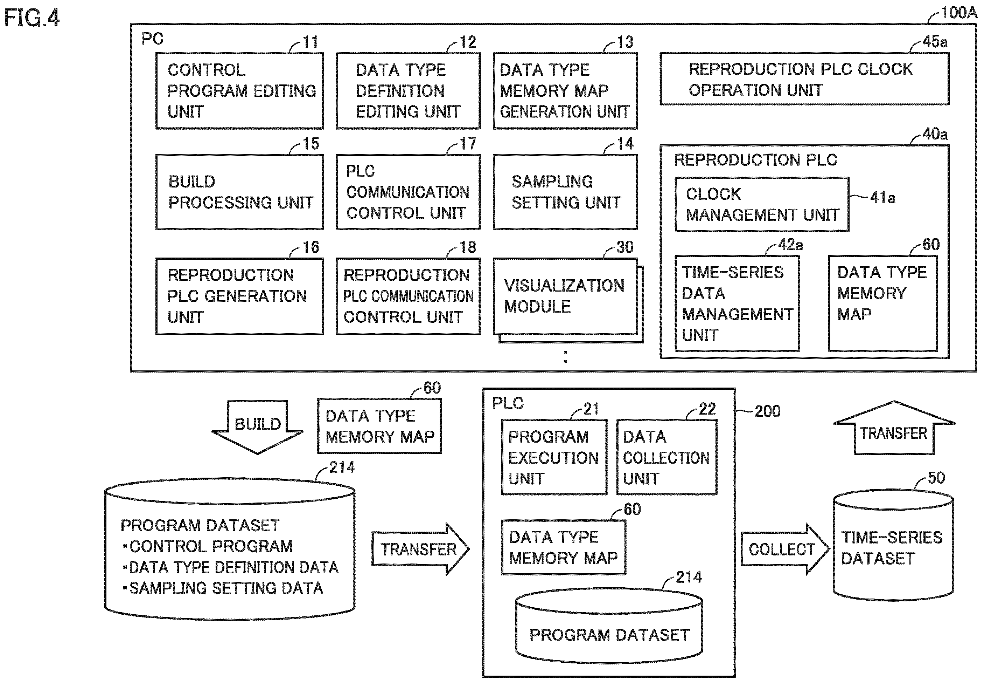

Fig. 4 is a block diagram showing an example of a software configuration of the PC and the PLC. As shown in Fig. 4, PC 100A includes a control program editing unit 11, a data type definition editing unit 12, a data type memory map generation unit 13, a sampling setting unit 14, a build processing unit 15, a reproduction PLC generation unit 16, a PLC communication control unit 17, a reproduction PLC communication control unit 18, one or more visualization modules 30, a reproduction PLC 40a, and a reproduction PLC clock operation unit 45a.

Control program editing unit 11, data type definition editing unit 12, data type memory map generation unit 13, sampling setting unit 14, build processing unit 15, and reproduction PLC generation unit 16 are implemented by execution of development program 131 by processor 101 shown in Fig. 2. PLC communication control unit 17 is implemented by processor 101 that executes development program 131 and also by communication interface 106. Reproduction PLC communication control unit 18 and reproduction PLC 40a are implemented by execution of reproduction program 133 by processor 101. Reproduction PLC clock operation unit 45a is implemented by processor 101 that executes reproduction program 133 and also by input interface 104. Each of one or more visualization modules 30 is implemented by execution of development program 131 or viewer program 132 by processor 101.

Control program editing unit 11 creates or edits a source code of the control program in response to the user input. The control program is, for example, a ladder program but is not limited thereto.

In response to the user input, data type definition editing unit 12 edits the data type of each of the variables used by the control program. The variables used by the control program include variables collected from one or more field devices 300 and variables generated by execution of the control program (variables to be output to one or more field devices 300). Data type definition editing unit 12 generates data type definition data indicating the data type edited for each variable.

Regarding the variable having an array element or a structure member, in response to the user input, data type memory map generation unit 13 generates a data type memory map 60 representing the size of the data type of each array element or each structure member, the arrangement information of the array element or the structure member, or the like. By using data type memory map 60, the start address and the size of any array element or any structure member are specified, and the value of any array element or any structure member is specified.

In response to the user input, sampling setting unit 14 sets the generation condition for time-series dataset 50, and generates sampling setting data indicating the set generation condition. As described above, the generation condition for time-series dataset 50 indicates the start condition for sampling, the variables to be sampled, the sampling time period, and the like. The start condition for sampling specifies, for example, that the value of the specific variable changes from the first value to the second value. When the start condition for sampling is satisfied, generation of time-series dataset 50 is started. The variables to be sampled are set from among a plurality of variables used by the control program. Note that all of the plurality of variables used by the control program may be set as targets to be sampled, or some of the plurality of variables used by the control program may be set as targets to be sampled. The sampling time period is a time period from the start to the end of generation of time-series dataset 50 and, for example, is 10 minutes but is not limited thereto.

Build processing unit 15 builds a source code of the control program and generates an object code from the source code. Build processing unit 15 transfers program dataset 214 including the control program of the generated object code to PLC 200. Program dataset 214 includes, in addition to the control program of the object code, the data type definition data generated by data type definition editing unit 12 and the sampling setting data generated by sampling setting unit 14. Further, data type memory map 60 generated by data type memory map generation unit 13 is also installed, together with program dataset 214, in PLC 200.

In response to the user input, reproduction PLC generation unit 16 invokes reproduction program 133 shown in Fig. 2 to generate reproduction PLC 40a and start the operation of reproduction PLC 40a.

One or more visualization modules 30 each visualize, on the screen, the visualization-target variable value representing the control state of PLC 200 as described above.

PLC communication control unit 17 controls communication with PLC 200. In response to the user input, PLC communication control unit 17 communicably connects one or more visualization modules 30 to PLC 200.

In response to the user input, reproduction PLC communication control unit 18 communicably connects one or more visualization modules 30 to reproduction PLC 40a.

Reproduction PLC 40a is an example of reproduction module 40 shown in Fig. 1, and sequentially reproduces the variable values held in PLC 200 for each first control cycle in the target period based on time-series dataset 50 recorded by PLC 200 in the target period. Reproduction PLC 40a includes a clock management unit 41a and a time-series data management unit 42a corresponding to time control module 41 and controller control state reproduction function 42, respectively, shown in Fig. 1.

Clock management unit 41a manages a target counter value corresponding to the target time in the target period at which the variable value is to be reproduced. The target counter value is a cycle counter of the first control cycle. Thus, the target counter value can represent the time period elapsed from the start of the target period in which the variable value is reproduced.

Clock management unit 41a updates the target counter value in response to an instruction from reproduction PLC clock operation unit 45a. Specifically, clock management unit 41a sets the replay start counter value designated by reproduction PLC clock operation unit 45a as a target counter value, and then adds 1 to the target counter value each time a prescribed time period elapses. Clock management unit 41a sets the prescribed time period according to the replay condition designated by reproduction PLC clock operation unit 45a.

Time-series data management unit 42a extracts the data at the target time corresponding to the target counter value from time-series dataset 50, and, based on the extracted data, reproduces the variable value held in memory 206 of PLC 200 at the target time. Thereby, time-series data management unit 42a reproduces the variable value held in PLC 200 in the next first control cycle at the timing at which the prescribed time period has elapsed. Time-series data management unit 42a may reproduce the value of the array element or the structure member of the variable by using data type memory map 60.

Reproduction PLC clock operation unit 45a is an example of time designation module 45 shown in Fig. 1. In response to the user input, reproduction PLC clock operation unit 45a sets a replay start counter value and a replay condition, and outputs the set replay start counter value and replay condition to reproduction PLC 40a.

As shown in Fig. 4, PLC 200 includes a program execution unit 21 and a data collection unit 22. Further, PLC 200 stores program dataset 214 and data type memory map 60 that have been transferred from PC 100A. Program execution unit 21 and data collection unit 22 are implemented by execution of the control program included in program dataset 214 by CPU 202 shown in Fig. 3.

Program execution unit 21 collects the state values indicating the states of one or more field devices 300, and generates command values for one or more field devices 300 by computation based on the collected state values.

Program execution unit 21 updates the variable values held in memory 206 shown in Fig. 3 according to a control cycle determined for each of the types of variables. When updating each variable value held in memory 206, program execution unit 21 updates each bit in a memory area storing each variable value according to the data type definition data included in program dataset 214. Further, for the variable having the array element or the structure member, program execution unit 21 updates each bit in the memory area storing the value of each array element or each structure member according to data type memory map 60 of the variable.

For the variable used for computation, according to the data type definition data, program execution unit 21 reads the variable value from each bit value in the memory area that corresponds to the variable. Further, for the array element or the structure member included in the variable, program execution unit 21 reads the value of the array element or the structure member by using data type memory map 60 of the variable.

Data collection unit 22 generates time-series dataset 50 according to the generation condition (including the start condition for sampling, the variables to be sampled, and the sampling time period) indicated by the sampling setting data included in program dataset 214. Specifically, upon satisfaction of the start condition for sampling, data collection unit 22 starts recording the variable values held in memory 206 regarding the variables to be sampled. When the sampling time period has elapsed from the start of recording of the variable values, data collection unit 22 ends the recording of the variable values, and generates time-series dataset 50 indicating the variable value at each time in the target period from the start to the end of the recording. Time-series dataset 50 is transferred from PLC 200 to PC 100A.

### <Operation Screen of Reproduction PLC>

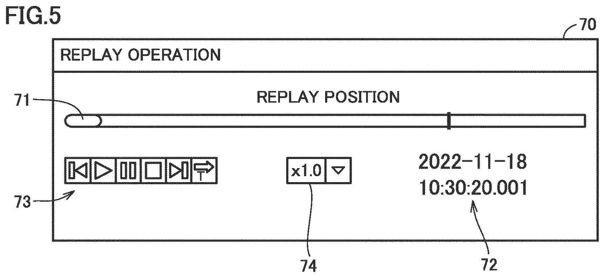

Fig. 5 is a diagram showing an example of the first window on which a replay operation by reproduction PLC is performed. A first window 70 shown in Fig. 5 is generated by processor 101 (see Fig. 2) that operates as reproduction PLC clock operation unit 45a (see Fig. 4) and displayed on display 120 by display controller 105.

First window 70 includes a cursor 71, a display area 72, a replay button group 73, and a replay speed input field 74.

Cursor 71 indicates time (also referred to as a "replay position") at which the variable value is reproduced by reproduction PLC 40a. When the target counter value is updated by reproduction PLC 40a, reproduction PLC clock operation unit 45a moves cursor 71 to a position corresponding to the target counter value. Further, reproduction PLC clock operation unit 45a receives an operation by the user to move cursor 71, and moves the position of cursor 71 in response to this operation for movement.

Display area 72 displays the time corresponding to the position of cursor 71. Thus, the time displayed in display area 72 is updated according to the movement of cursor 71.

Replay button group 73 includes a plurality of buttons for inputting an operation related to replay by reproduction PLC 40a. Specifically, replay button group 73 includes a replay button, a stop button, a pause button, a button for moving back to the start position, a button for moving forward to the end position, or the like.

Through replay speed input field 74, a replay speed is input. Reproduction PLC clock operation unit 45a causes a list of a plurality of replay speeds to be displayed in response to the operation performed on a pull-down button in replay speed input field 74. Reproduction PLC clock operation unit 45a causes replay speed input field 74 to show the replay speed selected from the list by the user. In the example shown in Fig. 5, the replay speed is represented by a scale factor. Thus, in the following description, the "replay speed" is expressed as a "scale factor".

In response to the user input to replay button group 73 on first window 70, reproduction PLC clock operation unit 45a sets a replay start counter value and a replay condition, and outputs the set replay start counter value and replay condition to reproduction PLC 40a.

Specifically, when one of the buttons included in replay button group 73 is operated, reproduction PLC clock operation unit 45a sets the counter value corresponding to the position of cursor 71 as a replay start counter value. For example, when the replay button is operated, reproduction PLC clock operation unit 45a sets the counter value corresponding to the current position of cursor 71 as a replay start counter value. When the button for moving back to the start position is operated, reproduction PLC clock operation unit 45a moves cursor 71 to the top position of the target period, and then, sets the counter value corresponding to the top position as the replay start counter value.

Further, reproduction PLC clock operation unit 45a sets the replay condition according to: the type of the operated button in replay button group 73; and the scale factor input to replay speed input field 74. For example, when the replay button or the button for moving back to the start position is operated, reproduction PLC clock operation unit 45a sets the replay condition so as to indicate the scale factor that has been input to replay speed input field 74. When the pause button is operated, reproduction PLC clock operation unit 45a sets the replay condition for indicating the replay speed as "0".

Also when the stop button is operated, reproduction PLC clock operation unit 45a sets the replay condition for indicating the replay speed as "0". Alternatively, when the stop button is operated, reproduction PLC clock operation unit 45a may instruct reproduction PLC 40a to stop the process of reproducing the variable value.

Clock management unit 41a of reproduction PLC 40a updates the target counter value in accordance with the replay start counter value and the replay condition received from reproduction PLC clock operation unit 45a. Specifically, clock management unit 41a sets the replay start counter value as the target counter value. Further, clock management unit 41a sets the prescribed time period according to the replay condition. For example, when the scale factor "×1.0" is set as the replay condition, clock management unit 41a sets the time period equal to the first control cycle as the prescribed time period. When the scale factor "×2.0" is set as the replay condition, clock management unit 41a sets the time period obtained by dividing the first control cycle by 2 as the prescribed time period. In this way, clock management unit 41a sets, as the prescribed time period, the time period obtained by dividing the first control cycle by the scale factor indicated by the replay condition.

When the replay speed "0" is set as the replay condition, clock management unit 41a stops updating the target counter value.

### <Example of Process by Time-Series Data Management Unit>

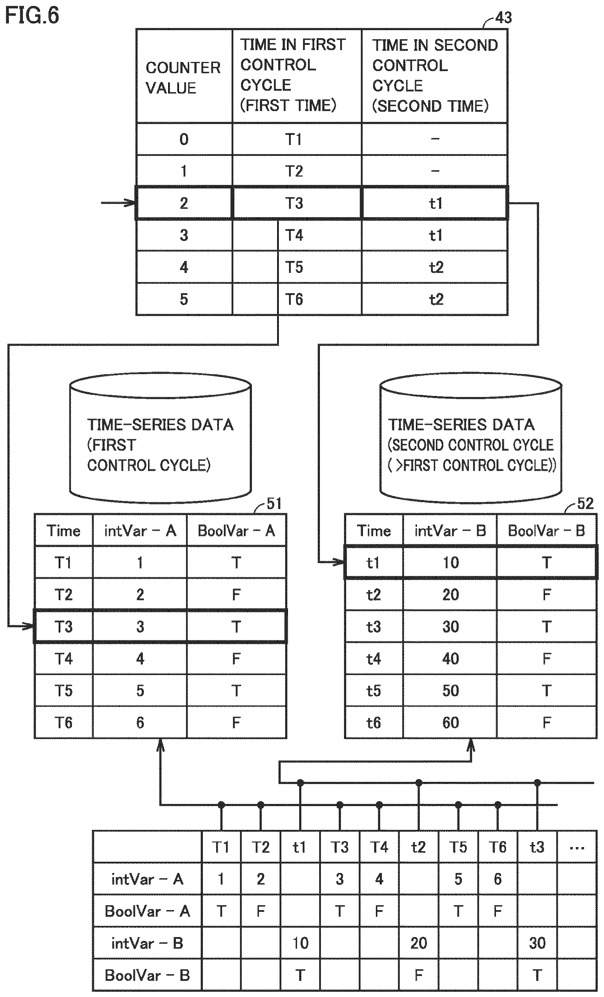

Fig. 6 is a diagram explaining an example of a process by the time-series data management unit. Fig. 6 shows an example of a process performed on time-series dataset 50 including: time-series data 51 indicating variable values for each first control cycle in the target period; and time-series data 52 indicating variable values for each second control cycle (> the first control cycle) in the target period. Time-series data 51 is an example of the first time-series data, and time-series data 52 is an example of the second time-series data.

PLC 200 updates the values of variables "IntVar-A" and "BoolVar-A" for each first control cycle. In the example shown in Fig. 6, PLC 200 updates the values of variables "IntVar-A" and "BoolVar-A" at time T1, time T2, time T3, time T4, ... included in the target period. The time difference between time Tk and time Tk + 1 is the first control cycle. PLC 200 generates time-series data 51 for the variable whose value is updated for each first control cycle. In other words, time-series data 51 indicates the values of variables "IntVar-A" and "BoolVar-A" at each of time T1, time T2, time T3, time T4, ....

PLC 200 updates the values of variables "IntVar-B" and "BoolVar-B" for each second control cycle. In the example shown in Fig. 6, PLC 200 updates the values of variables "IntVar-B" and "BoolVar-B" at time t1, time t2, time t3, .... The time difference between time tk and time tk + 1 is the second control cycle. PLC 200 generates time-series data 52 for the variable whose value is updated for each second control cycle. In other words, time-series data 52 indicates the values of variables "IntVar-B" and "BoolVar-B" at each of time t1, time t2, time t3, ...

In this way, PLC 200 generates time-series dataset 50 including: time-series data 51 indicating the variable value for each first control cycle in the target period; and time-series data 52 indicating the variable value for each second control cycle in the target period. Time-series dataset 50 is transferred to PC 100A.

Time-series data management unit 42a analyzes time-series dataset 50 to create a look-up table 43. For each first control cycle in the target period, look-up table 43 shows an association among: a counter value indicating the ordinal number of the first control cycle; a first time in the first control cycle; and a second time in the second control cycle, the second time being a time before the first time in the first control cycle and closest to the first time in the first control cycle. When the counter value starts from 0, for example, look-up table 43 shows an association among: the counter value "2"; time T3 in the first control cycle at the third place; and time t1 in the second control cycle (the second control cycle at the first place), time t1 being a time before time T3 and closest to time T3.

From look-up table 43, time-series data management unit 42a specifies the first time and the second time corresponding to the target counter values received from clock management unit 41a. From time-series data 51, time-series data management unit 42a reads the variable value corresponding to the specified first time. From time-series data 52, time-series data management unit 42a reads the variable value corresponding to the specified second time. Time-series data management unit 42a reproduces the read variable value as the variable value held in PLC 200 in the first control cycle that corresponds to the target counter value in the target period.

For example, when the target counter value is "2", time-series data management unit 42a specifies, from look-up table 43, time T3 and time t1 as the first time and the second time, respectively, corresponding to the target counter values. Time-series data management unit 42a reads, among time-series data 51, values "3" and "T" of variables "intVar-A" and "BoolVar-A" corresponding to time T3. Time-series data management unit 42a reads, among time-series data 52, values "10" and "T" of variables "intVar-B" and "BoolVar-B" corresponding to time t1. Time-series data management unit 42a reproduces the read variable values as the variable values held in PLC 200 in the first control cycle at the third place in the target period.

### <Switching of Modes>

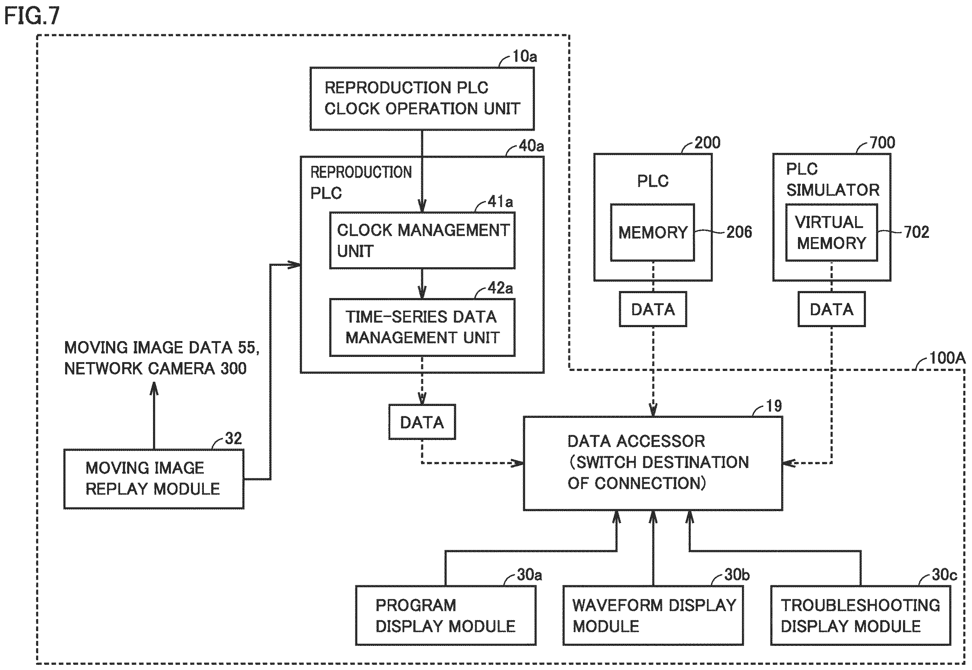

Fig. 7 is a diagram explaining a method of switching a source from which one or more visualization modules each acquire a visualization-target variable value. As shown in Fig. 7, PC 100A includes, as one or more visualization modules 30, a program display module 30a, a waveform display module 30b, and a troubleshooting display module 30c. Further, PC 100A includes a moving image replay module 32 and a data accessor 19. Program display module 30a and troubleshooting display module 30c are implemented by execution of development program 131 by processor 101 shown in Fig. 2. Waveform display module 30b and moving image replay module 32 are implemented by execution of viewer program 132 by processor 101. Data accessor 19 is implemented by processor 101 that executes development program 131 or reproduction program 133 and also by communication interface 106.

Program display module 30a monitors the status of execution of the control program by PLC 200, and generates data of a second window including the result of monitoring. The second window is displayed on display 120.

Waveform display module 30b generates data of a third window including a variable graph showing transitions of various variable values. The third window is displayed on display 120.

Troubleshooting display module 30c generates data of a fourth window in which errors occurring in the control program are visualized in time series. The fourth window shows a name, a task, an error position, an error number, and the like of the control program.

Moving image replay module 32 generates data of a fifth window in which the moving image captured by network camera 400 is replayed. The fifth window is displayed on display 120.

The second to fifth windows may be displayed side by side on display 120. Alternatively, display 120 may show only one or more windows selected by the user from among the second to fifth windows. In the playback mode described later, display 120 also shows first window 70 shown in Fig. 5 in addition to the second to fifth windows.

Data accessor 19 is an example of a selection unit that selects one mode from among a plurality of modes, and, in response to the user input, switches the destinations to which program display module 30a, waveform display module 30b, and troubleshooting display module 30c are connected. Data accessor 19 has a plurality of modes including a playback mode corresponding to the first mode, a real-time mode corresponding to the second mode, a simulation mode, and an off-line mode. In the playback mode, one or more visualization modules 30 each acquire a variable value reproduced by reproduction PLC 40a as a visualization-target variable value. In the real-time mode, one or more visualization modules 30 each acquire a variable value currently held in PLC 200 as a visualization-target variable value. In the simulation mode, one or more visualization modules 30 each acquire a variable value generated by a PLC simulator as a visualization-target variable value. In the off-line mode, one or more visualization modules 30 each do not visualize the variable value.

Upon receipt of an instruction to switch the mode to the playback mode, data accessor 19 switches, to reproduction PLC 40a, the destinations to which program display module 30a, waveform display module 30b, and troubleshooting display module 30c are connected. Thereby, program display module 30a, waveform display module 30b, and troubleshooting display module 30c each can acquire, through data accessor 19, the variable value reproduced by reproduction PLC 40a as a visualization-target variable value.

In the playback mode, moving image replay module 32 replays the moving image presented by moving image data 55 obtained by capturing images in the target period. Moving image replay module 32 causes the fifth window to display the frame at the time corresponding to the target counter value managed by clock management unit 41a of reproduction PLC 40a.

Upon receipt of an instruction to switch the mode to the real-time mode, data accessor 19 switches, to PLC 200, the destinations to which program display module 30a, waveform display module 30b, and troubleshooting display module 30c are connected. Thereby, program display module 30a, waveform display module 30b, and troubleshooting display module 30c each can acquire, through data accessor 19, the variable value currently held in memory 206 of PLC 200 as a visualization-target variable value.

In the real-time mode, moving image replay module 32 causes the fifth window to display a real-time video image of network camera 400.

Upon receipt of an instruction to switch the mode to the simulation mode, data accessor 19 switches, to a PLC simulator 700, the destinations to which program display module 30a, waveform display module 30b, and troubleshooting display module 30c are connected. Thereby, program display module 30a, waveform display module 30b, and troubleshooting display module 30c each can acquire, through data accessor 19, the variable value currently held in a virtual memory 702 of PLC simulator 700 as a visualization-target variable value.

Upon receipt of an instruction to switch the mode to the off-line mode, data accessor 19 prevents program display module 30a, waveform display module 30b, and troubleshooting display module 30c from being connected to any of PLC 200, reproduction PLC 40a, and PLC simulator 700.

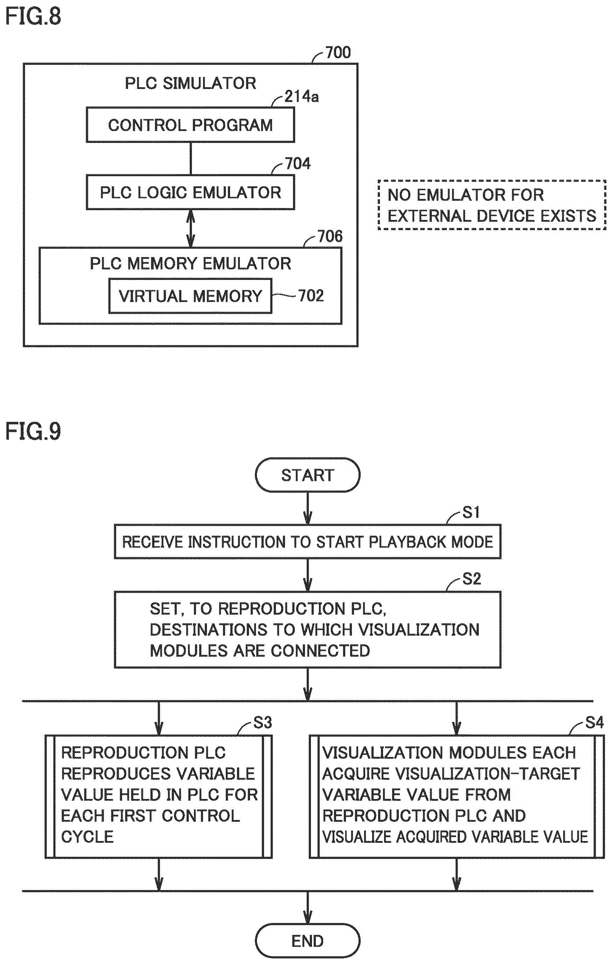

Fig. 8 is a diagram showing an example of a configuration of the PLC simulator. PLC simulator 700 is typically implemented by a general-purpose computer. As shown in Fig. 8, PLC simulator 700 includes a PLC logic emulator 704 and a PLC memory emulator 706. Further, a control program 214a included in program dataset 214 shown in Fig. 4 is installed in PLC simulator 700.

PLC logic emulator 704 emulates the operation of PLC 200 according to control program 214a.

PLC memory emulator 706 generates virtual memory 702 that mimics memory 206 of PLC 200 that operates according to control program 214a.

It is conceivable that the data having been input to PLC 200 in the target period is input to PLC simulator 700 to thereby reproduce the variable value held in memory 206 of PLC 200 in the target period. In PLC simulator 700, however, a simulation for an external device of PLC 200 is not performed. In other words, PLC simulator 700 cannot simulate the feedback data from an external device. Thus, PLC simulator 700 cannot accurately reproduce the variable value held in memory 206 of PLC 200 in the target period.

On the other hand, by using time-series dataset 50, reproduction PLC 40a can reproduce the variable values held in memory 206 of PLC 200 for each first control cycle in the target period. These variable values include all input values input from peripheral devices that operate in conjunction with PLC 200, including feedback values from external devices. Thus, the destinations to which one or more visualization modules 30 are connected are switched to reproduction PLC 40a, to thereby allow the user to check the state of PLC 200 in the target period by using one or more visualization modules 30.

### <Flow of Process by PC in Playback Mode>

Fig. 9 is a flowchart showing a flow of a process by the PC in the playback mode. First, in step S1, processor 101 of PC 100A receives an instruction to start the playback mode.

Then, in step S2, data accessor 19 sets, to reproduction PLC 40a, the destinations to which one or more visualization modules 30 are connected. After step S2, the processes in steps S3 and S4 are performed in parallel.

In step S3, reproduction PLC 40a reproduces the variable value held in PLC 200 for each first control cycle in the target period.

In step S4, one or more visualization modules 30 each acquire the visualization-target variable value (i.e., the reproduced variable value) from reproduction PLC 40a and visualize the acquired variable value. After steps S3 and S4, processor 101 ends the process.

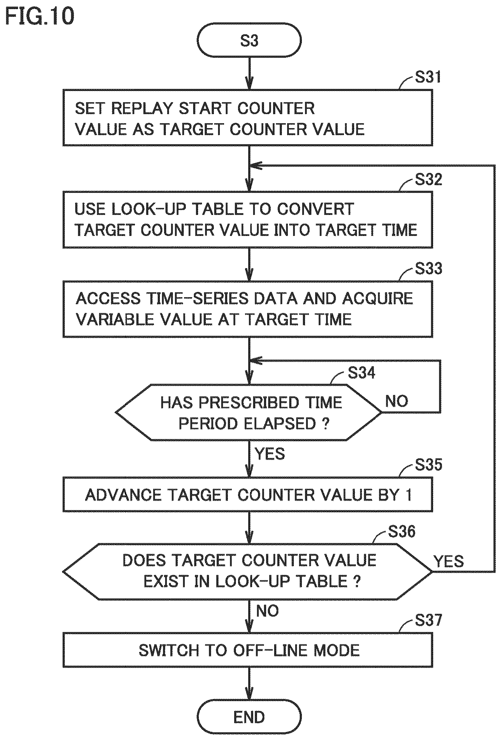

Fig. 10 is a flowchart showing a flow of a process of a subroutine in step S3 shown in Fig. 9.

In step S31, clock management unit 41a sets, as a target counter value, the replay start counter value set in response to the user input to first window 70 shown in Fig. 5.

In next step S32, time-series data management unit 42a uses look-up table 43 to convert the target counter value into target time of each time-series data included in time-series dataset 50.

In next step S33, time-series data management unit 42a accesses each time-series data included in time-series dataset 50, and acquires the variable value at the target time.

In next step S34, clock management unit 41a determines whether or not a prescribed time period has elapsed since the latest target counter value was set. The prescribed time period is set in advance in response to the user input to first window 70 shown in Fig. 5. If the prescribed time period has not elapsed (NO in step S34), the process returns to step S34.

If the prescribed time period has elapsed (YES in step S34), clock management unit 41a advances the target counter value by 1 in step S35.

In next step S36, time-series data management unit 42a determines whether or not the target counter value exists in look-up table 43.

If the target counter value exists in look-up table 43 (YES in step S36), the process returns to step S32.

If the target counter value does not exist in look-up table 43 (YES in step S36), then in step S37, data accessor 19 switches the mode of each of one or more visualization modules 30 to an off-line mode. After step S37, the process in step S3 ends.

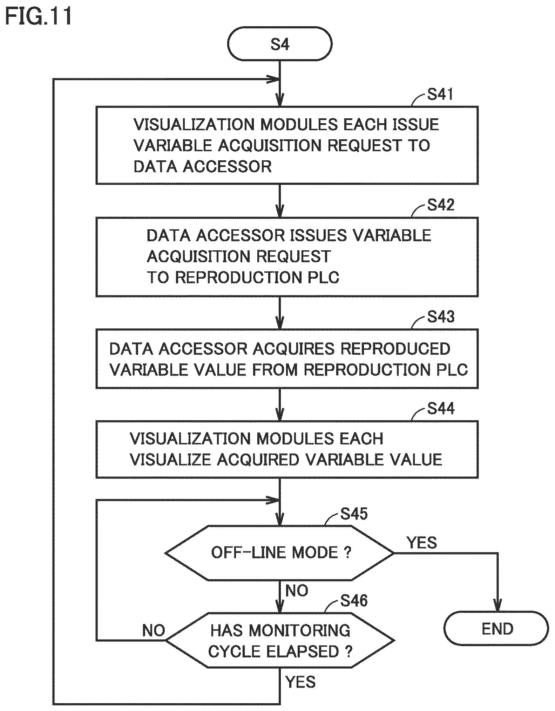

Fig. 11 is a flowchart showing a flow of a process of a subroutine in step S4 shown in Fig. 9.

In step S41, one or more visualization modules 30 each issue a variable acquisition request to data accessor 19.

In next step S42, data accessor 19 issues a variable acquisition request to reproduction PLC 40a.

In next step S43, data accessor 19 acquires the reproduced variable value from reproduction PLC 40a. Thereby, one or more visualization modules 30 acquire the reproduced variable values.

In next step S44, one or more visualization modules 30 visualize the acquired variable values.

In next step S45, data accessor 19 determines whether or not the mode has been switched to the off-line mode.

If the mode has not been switched to the off-line mode (NO in step S45), then in step S46, one or more visualization modules 30 each determine whether or not a predetermined monitoring cycle has elapsed since issuance of the latest variable acquisition request. The monitoring cycle is, for example, 100 ms but is not limited thereto.

If the monitoring cycle has not elapsed (NO in step S46), the process returns to step S45. If the monitoring cycle has elapsed (YES in step S46), the process returns to step S41.

If the mode is switched to the off-line mode (YES in step S45), the process in step S4 ends. Thereby, one or more visualization modules 30 end visualization of the variable values.

### <Modifications>

In the above description, information processing system 100 is constituted of one PC 100A. However, information processing system 100 may be constituted of a plurality of computers. For example, information processing system 100 may be constituted of: a first computer implementing each of one or more visualization modules 30; and a second computer implementing each of reproduction module 40 and time designation module 45.

Alternatively, information processing system 100 may be configured by a hardware environment such as a virtual machine on the cloud, other than a general-purpose PC.

### §3 Additional Aspects

As described above, the present embodiment includes the following disclosure.

### (Configuration 1)

An information processing system (100, 100A) comprising:
one or more visualization modules (30, 30a to 30c, 101) each configured to visualize a visualization-target variable value representing a control state of a programmable logic controller (200); and
a reproduction module (40, 40a, 101) configured to sequentially reproduce a variable value held in the programmable logic controller (200) for each first control cycle of the programmable logic controller (200) in a target period based on a time-series dataset (50) recorded by the programmable logic controller (200) in the target period, wherein
the one or more visualization modules (30, 30a to 30c, 101) are each configured to acquire, as the visualization-target variable value, the variable value reproduced by the reproduction module (40, 40a, 101).

### (Configuration 2)

The information processing system (100, 100A) according to Configuration 1, wherein the reproduction module (40, 40a, 101) is configured to reproduce the variable value held in the programmable logic controller (200) in a first control cycle subsequent to a target first control cycle in the target period at a timing at which a prescribed time period has elapsed since reproduction of the variable value held in the programmable logic controller (200) in the target first control cycle in the target period.

### (Configuration 3)

The information processing system (100, 100A) according to Configuration 2, wherein
the time-series dataset (50) includes:
   first time-series data (51) indicating a value of a first variable for each the first control cycle in the target period; and
   second time-series data (52) indicating a value of a second variable for each second control cycle in the target period, the second control cycle being longer than the first control cycle, and
the reproduction module is configured to:
   read, from the first time-series data (51), a first target value of the first variable in the target first control cycle;
   read, from the second time-series data (52), a second target value of the second variable in a target second control cycle, the target second control cycle being a cycle before the target first control cycle and closest to the target first control cycle; and
   determine the first target value and the second target value each as the variable value held in the programmable logic controller (200) in the target first control cycle.

### (Configuration 4)

The information processing system (100, 100A) according to Configuration 3, wherein
the first time-series data (51) further indicates a first time for each the first control cycle in the target period,
the second time-series data (52) further indicates a second time for each the second control cycle in the target period,
the reproduction module (40, 40a, 101) is configured to refer to a table (43) to read the first target value and the second target value from the first time-series data (51) and the second time-series data (52), respectively,
the table (43) shows an association, for each the first control cycle in the target period, among:
   a counter value representing an ordinal number of the first control cycle;
   the first time in the first control cycle; and
   the second time in the second control cycle, the second time being a time before the first time in the first control cycle and closest to the first time in the first control cycle, and
the reproduction module (40, 40a, 101) is configured to:
   add 1 to a target counter value each time the prescribed time period elapses;
   specify, from the table (43), the first time and the second time each corresponding to the target counter value;
   read, from the first time-series data (51), the value of the first variable corresponding to the specified first time as the first target value; and
   read, from the second time-series data (52), the value of the second variable corresponding to the specified second time as the second target value.

### (Configuration 5)

The information processing system (100, 100A) according to any one of Configurations 2 to 4, wherein
the prescribed time period is selected from among:
a time period equal to the first control cycle; and
a time period obtained by dividing a time period of the first control cycle by a designated scale factor.

### (Configuration 6)

The information processing system according to any one of Configurations 1 to 5, further comprising a selection unit (19, 101) configured to select one of a plurality of modes including:
a first mode in which the one or more visualization modules (30, 30a to 30c, 101) each acquire, as the visualization-target variable value, the variable value reproduced by the reproduction module (40, 40a, 101); and
a second mode in which the one or more visualization modules (30, 30a to 30c, 101) each acquire, as the visualization-target variable value, a variable value currently held in the programmable logic controller (200).

### (Configuration 7)

An information processing method in an information processing apparatus including one or more visualization modules each configured to visualize a visualization-target variable value representing a control state of a programmable logic controller (200), the information processing method comprising:
(S3) sequentially reproducing a variable value held in the programmable logic controller (200) for each first control cycle of the programmable logic controller (200) in a target period based on a time-series dataset (50) recorded by the programmable logic controller (200) in the target period; and
(S4) acquiring, by each of the one or more visualization modules (30, 30a to 30c, 101), the reproduced variable value as the visualization-target variable value.

### (Configuration 8)

A program (133) for causing a computer (100A) to execute an information processing method, the computer (100A) including one or more visualization modules each configured to visualize a visualization-target variable value representing a control state of a programmable logic controller (200),
the information processing method comprising:
(S3) sequentially reproducing a variable value held in the programmable logic controller (200) for each first control cycle of the programmable logic controller (200) in a target period based on a time-series dataset (50) recorded by the programmable logic controller (200) in the target period; and
(S4) acquiring, by each of the one or more visualization modules (30, 30a to 30c, 101), the reproduced variable value as the visualization-target variable value.

Although the embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

### REFERENCE SIGNS LIST

1 manufacturing system, 11 control program editing unit, 12 data type definition editing unit, 13 data type memory map generation unit, 14 sampling setting unit, 15 build processing unit, 16 reproduction PLC generation unit, 17 PLC communication control unit, 18 reproduction PLC communication control unit, 19 data accessor, 21 program execution unit, 22 data collection unit, 30 visualization module, 30a program display module, 30b waveform display module, 30c troubleshooting display module, 32 moving image replay module, 40 reproduction module, 40a reproduction PLC, 41 time control module, 41a clock management unit, 42 controller control state reproduction function, 42a management unit, 43 look-up table, 45 time designation module, 45a reproduction PLC clock operation unit, 50 time-series dataset, 51, 52 time-series data, 55 moving image data, 60 data type memory map, 70 first window, 71 cursor, 72 display area, 73 replay button group, 74 reproduction speed input field, 100 information processing system, 100A PC, 101 processor, 102, 206 memory, 103, 208 storage, 104 input interface, 105 display controller, 106 communication interface, 107, 270 reader/writer, 110 input device, 120 display, 131 development program, 132 viewer program, 133 reproduction program, 200 PLC, 201 power supply circuit, 202 CPU, 204 chipset, 211 system program, 213 scheduler program, 214 program dataset, 214a control program, 250 USB controller, 252 field network controller, 252a, 254a connector, 254 network controller, 260 timer, 300 field device, 400 network camera, 500 network storage, 600 storage medium, 700 PLC simulator, 702 virtual memory, 704 PLC logic emulator, 706 PLC memory emulator.

## Claims

1. An information processing system comprising:
one or more visualization modules each configured to visualize a visualization-target variable value representing a control state of a programmable logic controller; and
a reproduction module configured to sequentially reproduce a variable value held in the programmable logic controller for each first control cycle of the programmable logic controller in a target period based on a time-series dataset recorded by the programmable logic controller in the target period, wherein
the one or more visualization modules are each configured to acquire, as the visualization-target variable value, the variable value reproduced by the reproduction module.

2. The information processing system according to claim 1, wherein the reproduction module is configured to reproduce the variable value held in the programmable logic controller in a first control cycle subsequent to a target first control cycle in the target period at a timing at which a prescribed time period has elapsed since reproduction of the variable value held in the programmable logic controller in the target first control cycle in the target period.

3. The information processing system according to claim 2, wherein
the time-series dataset includes:
first time-series data indicating a value of a first variable for each the first control cycle in the target period; and
second time-series data indicating a value of a second variable for each second control cycle in the target period, the second control cycle being longer than the first control cycle, and
the reproduction module is configured to:
read, from the first time-series data, a first target value of the first variable in the target first control cycle;
read, from the second time-series data, a second target value of the second variable in a target second control cycle, the target second control cycle being a cycle before the target first control cycle and closest to the target first control cycle; and
determine the first target value and the second target value each as the variable value held in the programmable logic controller in the target first control cycle.

4. The information processing system according to claim 3, wherein
the first time-series data further indicates a first time for each the first control cycle in the target period,
the second time-series data further indicates a second time for each the second control cycle in the target period,
the reproduction module is configured to refer to a table to read the first target value and the second target value from the first time-series data and the second time-series data, respectively,
the table shows an association, for each the first control cycle in the target period, among:
a counter value representing an ordinal number of the first control cycle;
the first time in the first control cycle; and
the second time in the second control cycle, the second time being a time before the first time in the first control cycle and closest to the first time in the first control cycle, and
the reproduction module is configured to:
add 1 to a target counter value each time the prescribed time period elapses;
specify, from the table, the first time and the second time each corresponding to the target counter value;
read, from the first time-series data, the value of the first variable corresponding to the specified first time as the first target value; and
read, from the second time-series data, the value of the second variable corresponding to the specified second time as the second target value.

5. The information processing system according to any one of claims 2 to 4, wherein
the prescribed time period is selected from among:
a time period equal to the first control cycle; and
a time period obtained by dividing a time period of the first control cycle by a designated scale factor.

6. The information processing system according to any one of claims 1 to 5, further comprising a selection unit configured to select one of a plurality of modes including:
a first mode in which the one or more visualization modules each acquire, as the visualization-target variable value, the variable value reproduced by the reproduction module; and
a second mode in which the one or more visualization modules each acquire, as the visualization-target variable value, a variable value currently held in the programmable logic controller.

7. An information processing method in an information processing apparatus including one or more visualization modules each configured to visualize a visualization-target variable value representing a control state of a programmable logic controller, the information processing method comprising:
sequentially reproducing a variable value held in the programmable logic controller for each first control cycle of the programmable logic controller in a target period based on a time-series dataset recorded by the programmable logic controller in the target period; and
acquiring, by each of the one or more visualization modules, the reproduced variable value as the visualization-target variable value.

8. A program for causing a computer to execute an information processing method, the computer including one or more visualization modules each configured to visualize a visualization-target variable value representing a control state of a programmable logic controller,
the information processing method comprising:
sequentially reproducing a variable value held in the programmable logic controller for each first control cycle of the programmable logic controller in a target period based on a time-series dataset recorded by the programmable logic controller in the target period; and
acquiring, by each of the one or more visualization modules, the reproduced variable value as the visualization-target variable value.
